# EUROPÄISCHE PATENTSCHRIFT

(11) **EP 3 645 297 B1**
(45) Veröffentlichungstag und Bekanntmachung des Hinweises auf die Patenterteilung: **07.09.2022**
(21) Anmeldenummer: 18732091.6
(22) Anmeldetag: 22.06.2018
(51) Int. Cl.: B41M 3/14, B42D 25/41, B41M 5/26, B42D 25/36

(54) **VERBESSERTES VERFAHREN ZUM PARTIELLEN EINFÄRBEN VON KUNSTSTOFFTEILEN**
IMPROVED METHOD FOR THE PARTIAL COLOURING OF PLASTIC PARTS
PROCÉDÉ AMÉLIORÉ DE COLORATION PARTIELLE DE PIÈCES EN MATIÈRE PLASTIQUE

(30) Priorität: 28.06.2017 EP 17178250; 05.07.2017 LU 100327
(43) Veröffentlichungstag der Anmeldung: 06.05.2020
(73) Patentinhaber: Covestro Deutschland AG, 51373 Leverkusen (DE)
(72) Erfinder: TZIOVARAS, Georgios, 41464 Neuss (DE); PIERMATTEO, Ciro, Pudong (CN); PUDLEINER, Heinz, 47800 Krefeld (DE); PLANKEN, Kira, 47574 Goch (DE); JANKE, Stefan, 41379 Brüggen (DE)
(74) Vertreter: Levpat
(86) Internationale Anmeldenummer: PCT/EP2018/066731
(87) Internationale Veröffentlichungsnummer: WO 2019/002118

(56) Entgegenhaltungen:
- WO-A1-2010/046042
- WO-A1-2010/089035
- WO-A1-2012/076406
- WO-A1-2014/057039
- WO-A2-2009/071068
- WO-A2-2012/076354

## Beschreibung

Die vorliegende Erfindung betrifft ein verbessertes Verfahren zum partiellen Einfärben, insbesondere zum farbigen Lasergravieren, von Kunststoffteilen, insbesondere thermoplastische Kunststoffteile, ganz besonders thermoplastische Kunststoffteile umfassend einen Schichtaufbau sowie die resultierenden partiell eingefärbten, vorzugsweise farbig lasergravierten, Kunststoffteile, insbesondere thermoplastische Kunststoffteile, ganz besonders thermoplastische Kunststoffteile umfassend einen Schichtaufbau.

Die Möglichkeit Kunststoffteile farbig mittels Laser zu gravieren ist von Interesse für die gesamte Industrie der Kunststoffteilefertigung. Von Interesse ist hierbei die farbige Lasergravur von dreidimensional geformten Kunststoffteilen z.B. für die Automobilindustrie. So können z. B. Schalter, Blenden, usw. mit farbigen Symbolen graviert werden. Dabei können auch Kunststoffteile mittels Laser farbig graviert werden, welche eine Lackierung für deren Oberflächenschutz aufweisen. Der Laserstrahl entfernt die Lackschicht und gleichzeitig migriert der Farbstoff an dieser Stelle in die Kunststoffoberfläche ein. Es können auch ungeschützte Kunststoffoberflächen farbig lasergraviert werden und anschließend lackiert werden, um eine durchgehende glänzende Erscheinung der Kunststoffteile zu gewährleisten und Schutz gegen Kratzer und chemischer Beschädigung zu bieten. Bislang können solche farbigen Symbole beispielsweise im ersten Fertigungsschritt durch Kunststoffspritzguss mit mehreren farbigen Komponenten hergestellt werden. In einem zweiten Fertigungsschritt müssen die Kunststoffteile mit einer deckenden Farbe lackiert werden. In einem dritten Fertigungsschritt muss die Farbschicht mittels Laser graviert werden um die darunterliegende Kunststoffoberfläche freizulegen. Optional kann in einem vierten Fertigungsschritt ein Schutzlack aufgetragen werden.

Alternativ können transparente Kunststofffolien rückseitig farbig graviert werden und anschließend mit einem Thermoplasten hinterspritzt werden, entsprechend dem Verfahren Film Insert Moulding, um glänzende oder einheitlich aussehende Oberflächen zu erhalten. Dieses Verfahren wird beispielsweise in EP-A 0691201 Beispiel 1 offenbart.

Auf dem Markt der Sicherheits- und/oder Wertdokument, insbesondere IdentifikationsDokumente (ID-Dokumente) besteht der Bedarf für farbiges Personalisieren dieser Dokumente mittels Laser. Das Personalisieren von Identifikationsdokumenten (ID-Dokumenten), welche teilweise oder komplett aus Polymerfolien bestehen, durch das Verfahren der Lasergravur, stellt den Stand der Technik dar. Jedoch erstellen die bislang bekannten Verfahren in den Dokumenten lediglich Bilder und Texte in verschiedenen Graustufen. Farbige Elemente können durch Lasergravur nicht erstellt werden. Nur in Kombination mit zuvor drucktechnisch aufgetragenen Farbschichten, welche nachträglich mittels Laser verändert werden, ist es möglich, farbige Bilder in oder auf solchen Sicherheits- und/oder Wertdokumenten zu generieren.

In den letzten Jahren wurden insbesondere im Bereich der Sicherheits- und/oder Wertdokumente, insbesondere ID-Dokumente, Verfahren entwickelt, welche das Erstellen von farbigen Elementen in diesen Dokumenten, die ganz oder teilweise aus Polymerfolien aufgebaut sind, erlauben. Diese Verfahren sind jedoch mit erheblichem technischem Aufwand verbunden. Alle Verfahren beinhalten einen Druckprozess um die Farbgebung zu realisieren.

WO-A 03/056507 offenbart ein Verfahren, bei welchen ein farbiges Bild mittels Lasergravur wie folgt entstehen kann: Auf einer Folie, auf deren Fläche später ein farbiges Bild entstehen soll, wird vollflächig eine Farbe aufgedruckt, die mit einer bestimmten Wellenlänge von Laserlicht reagiert. Die Reaktion äußert sich in Verbleichen der Farbpigmente, sobald diese vom Laser belichtet werden. Bei der Verwendung von drei Arten von Pigmenten, z.B. rot, gelb, blau, die bei drei verschiedenen Wellenlängen reagieren, ist es möglich vollfarbige Bilder zu erstellen, indem die Pigmente an den laserbestrahlten Stellen entsprechend gebleicht werden. Dieses Verfahren ist jedoch besonders aufwändig, da drei verschiedene Laserquellen verwendet werden müssen und die Farbe vollflächig auf die Oberfläche aufgedruckt werden muss. Dadurch ist die Verbundhaftung der Folien nach dem Laminieren im Bereich des Bildes nicht ausreichend gut ist.

In der WO2012076354A2 wird ein Verfahren zur Farblasermarkierung eines Sicherheitsdokumentenvorläufers beschrieben, bei dem auf einer farblosen farbbildenden Schicht eine von schwarz verschiedene Farbe mittels eines, im Dauerstrichmodus betriebenen, Lasers und auf einer weiteren lasermarkierbaren Schicht, mittels des gleichen Lasers im gepulsten Modus, eine schwarze Farbe eingebracht wird.

Ein weiteres Verfahren wird in EP-A 2752302 offenbart und basiert auf dem Prinzip eines Farbdisplays: Auf Folien werden schmale Linien in den Basisfarben rot, gelb, blau gedruckt. Diese Linien werden anschließend mittels Laser selektiv geschwärzt um den Eindruck eines Farbbildes entstehen zu lassen. Auch dieses Verfahren ist aufwändig, da im Vorfeld sehr exakt gedruckt werden muss, um das Bild entstehen zu lassen. Außerdem ist die Auflösung des Bildes sehr grob, da die Linien einen Abstand von ca. 80 µm nicht unterschreiten können, und die Bilder erscheinen dunkel, da ein Großteil der Bildfläche durch den Laser geschwärzt wird.

JP-A 2012-011689 offenbart eine Methode und eine Apparatur zur farbigen Laserbedruckung auf Formteile ohne das Substrat zu beschädigen. Bei diesem Verfahren wird die Tinte mittels Inkjet auf das Formteil aufgebracht und dann wird diese Tinte mittels Laserstrahl auf dem Formteil fixiert.

EP-A 2179857 offenbart Schichtaufbauten für Lasergravur beschreibbare ID-Karten, welche eine zusätzliche Schicht aufweisen, die nach der Lasergravur auf den Kartenkörper aufgebracht wird und so das nachträgliche Beschreiben der Karte mittels Lasergravur und damit das Verfälschen der enthaltenden Informationen einschränkt bzw. vollständig verhindert. Farbiges Lasergravieren wird nicht offenbart.

WO-A 2005/033218 offenbart Eisenblau-Pigment enthaltende Lackzusammensetzung, die zur Herstellung einer lasergravierfähigen Lackschicht geeignet ist, die sich mit einem Laser schmauchspuren- und rückstandsfrei lasergravieren lässt. Durch die Lasergravur wird die Lackschicht abgetragen und so die entsprechende Information aufgebracht.

EP-Anmeldenummer 16162536.3 offenbart ein Verfahren zum partiellen Einfärben, insbesondere zum farbigen Lasergravieren, von Kunststoffteilen, insbesondere thermoplastische Kunststoffteilen, ganz besonders von Kunststofffolien. Nachteilig bei diesem Verfahren ist jedoch die Intensität der farbigen Lasergravur auf den Kunststoffteilen.

Es war daher Aufgabe der vorliegenden Erfindung ein verbessertes und einfaches Verfahren zum partiellen Einfärben, insbesondere für das farbige Lasergravieren, von Kunststoffteilen, bevorzugt von thermoplastischen Kunststoffteilen, ganz besonders von thermoplastischen Kunststoffteilen umfassend einen Schichtaufbau, wie beispielsweise Kunststofffolien und/oder Folienschichtverbunden bereit zu stellen.

Diese Aufgabe wurde überraschenderweise gelöst durch das erfindungsgemäße Verfahren zum partiellen Einfärben, insbesondere farbigen Lasergravieren, von Kunststoffteilen, insbesondere thermoplastischen Kunststoffteilen, ganz besonders von thermoplastischen Kunststoffteilen umfassend einen Schichtaufbau, enthaltend die Schritte
i) Eintauchen eines Kunststoffteils in ein Färbungsbad,
ii) gegebenenfalls Erwärmen des Färbungsbads,
iii) Bestrahlung des Kunststoffteils aus i) und ggfs. ii) mit fokussierter nicht-ionisierender elektromagnetischer Strahlung,

wobei die partielle Einfärbung im Wesentlichen nur an den in Schritt iii) bestrahlten Stellen erfolgt;
wobei der Wellenlängenbereich der fokussierten nicht-ionisierenden elektromagnetischen Strahlung so gewählt wird, dass das Färbungsbad eine Lichtdurchlässigkeit von ≥ 10 % bis ≤ 99%, bevorzugt von ≥ 30 % bis ≤ 95 %, besonders bevorzugt ≥ 40 % bis ≤ 93% bestimmt nach ISO 13468-2 aufweist;
wobei das Kunststoffteil wenigstens ein Additiv umfasst, welches im Wellenlängenbereich der eingesetzten fokussierten nicht-ionisierenden elektromagnetischen Strahlung ein Absorptionsmaximum aufweist, oder wobei das Kunststoffteil mit wenigstens einem Additiv in Form eines Beschichtungsmittels beschichtet ist, welches im Wellenlängenbereich der eingesetzten fokussierten nicht-ionisierenden elektromagnetischen Strahlung ein Absorptionsmaximum aufweist.

Im Rahmen dieser Erfindung wird unter "im Wesentlichen" verstanden, dass lediglich an den in Schritt iii) bestrahlten Stellen ein farbiges Element entsteht, welches mit dem Auge als sichtbares farbiges Element eindeutig zu erkennen ist. Es ist hierbei nicht ausgeschlossen, dass eine leichte Einfärbung des Kunststoffteils an den nicht bestrahlten Stellen erfolgen kann.

Das erfindungsgemäße Verfahren zeichnet sich dadurch aus, dass eine partielle Einfärbung des Kunststoffteils, insbesondere des thermoplastischen Kunststoffteils, ganz besonders des thermoplastischen Kunststoffteils umfassend einen Schichtaufbau, im Wesentlichen an den in Schritt iii) bestrahlten Stellen erfolgt. Das restliche Kunststoffteil weist keine bzw. nur eine sehr schwache Einfärbung an den nicht bestrahlten Bereichen auf. Somit ist es möglich, gezielt Bereiche des Kunststoffteils einzufärben, um beispielsweise Bild, Personalisierung, Logo, Symbol oder Schriftzug auf dieses Kunststoffteil durch das erfindungsgemäße Verfahren aufzubringen. Diese lassen sich nicht ohne Weiteres von der Kunststoffoberfläche entfernen. Somit eignet sich das erfindungsgemäße Verfahren insbesondere für den Bereich der Herstellung von Sicherheits- und Identifikationsdokumente.

Insbesondere bei Bestrahlung mit Laserstrahlung erreichen diese farbigen Elemente besonders hohe Auflösungen von 5000 dpi und gegebenenfalls auch höher. Das erfindungsgemäße Verfahren erfordert weder eine hochpräzise Drucktechnik noch den Einsatz verschiedener Laserstärken, sofern die Bestrahlung in Schritt iii) mit Laserstrahlung erfolgt. Zudem ist das erfindungsgemäße Verfahren für das Aufbringen von farbigen Elementen sowohl auf dreidimensionalen Kunststoffteilen als auch auf thermoplastischen Kunststoffteilen umfassend einen Schichtaufbau enthaltend eine oder mehrere Schichten eines thermoplastischen Kunststoffs geeignet.

In einer alternativen Ausführungsform des erfindungsgemäßen Verfahren lässt sich vor oder nach der partiellen farbigen Einfärbung gemäß der Schritte i) bis iii) des erfindungsgemäßen Verfahrens, zusätzlich eine schwarz-weiße Einfärbung auf das Kunststoffteil aufbringen. In dieser Ausführungsform der Erfindung erfolgt vor oder nach den Schritten i) bis iii) eine Bestrahlung mit fokussierter nicht-ionisierender elektromagnetischer Strahlung wie in Schritt iii) in Abwesenheit des Färbungsbads.

Im erfindungsgemäßen Verfahren können eine Vielzahl an Kunststoffteilen, insbesondere thermoplastische Kunststoffteile, ganz besonders thermoplastische Kunststoffteile umfassend einen Schichtaufbau, wobei der Schichtaufbau wenigstens eine Schicht eines thermoplastischen Kunststoffs, enthaltend wenigstens ein Additiv, welches im Wellenlängenbereich der eingesetzten fokussierten nicht-ionisierenden elektromagnetischen Strahlung ein Absorptionsmaximum aufweist, umfassen kann, und wobei diese wenigstens eine Schicht eines thermoplastischen Kunststoffs eine Lichtdurchlässigkeit von ≥ 10 % bis ≤ 99%, bevorzugt von ≥ 30 % bis ≤ 95 %, besonders bevorzugt ≥ 40 % bis ≤ 93%, bestimmt nach ISO 13468-2, aufweist.

Bei den vorzugsweise thermoplastischen Kunststoffteilen kann es sich besonders bevorzugt um einen thermoplastischen Kunststoff ausgewählt aus Polymerisaten von ethylenisch ungesättigten Monomeren und/oder Polykondensaten von bifunktionellen reaktiven Verbindungen und/oder Polyadditionsprodukten von bifunktionellen reaktiven Verbindungen handeln.

Besonders geeignete thermoplastische Kunststoffe sind ein oder mehrere Polycarbonat(e) oder Copolycarbonat(e) auf Basis von Diphenolen, Poly- oder Copolyacrylat(e) und Poly- oder Copolymethacrylat(e) wie beispielhaft und vorzugsweise Polymethylmethacrylat bzw. Poly(meth)acrylat (PMMA), Poly- oder Copolymer(e) mit Styrol wie beispielhaft und vorzugsweise Polystyrol (PS), Acrylnitril-Butadien-Styrol (ABS), oder Polystyrolacrylnitril (SAN), thermoplastische Polyurethan(e), sowie Polyolefin(e), wie beispielhaft und vorzugsweise Polypropylentypen oder Polyolefine auf der Basis von cyclischen Olefinen (z.B. TOPAS^{™}, Hoechst), Poly- oder Copolykondensat(e) der Terephthalsäure, wie beispielhaft und vorzugsweise Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT) ), Polyamid (PA), Poly- oder Copolykondensat(e) der Naphthalindicarbonsäure, wie beispielhaft und vorzugsweise Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Mischungen aus den vorangehend genannten oder deren Blends.

Besonders bevorzugte thermoplastische Kunststoffe sind ein oder mehrere Polycarbonat(e) oder Copolycarbonat(e) auf Basis von Diphenolen oder Blends enthaltend wenigstens ein Polycarbonat oder Copolycarbonat. Ganz besonders bevorzugt sind Blends enthaltend wenigstens ein Polycarbonat oder Copolycarbonat und wenigstens ein Poly- oder Copolykondensat der Terephthalsäure, der Naphthalindicarbonsäure oder einer Cycloalkyldicarbonsäure, bevorzugt der Cyclohexandicarbonsäure Ganz besonders bevorzugt sind Polycarbonate oder Copolycarbonate, insbesondere mit mittleren Molekulargewichten Mw von 500 bis 100 000, bevorzugt von 10 000 bis 80 000, besonders bevorzugt von 15 000 bis 40 000 oder deren Blends mit wenigstens einem Poly- oder Copolykondensat der Terephthalsäure mit mittleren Molekulargewichten Mw von 10.000 bis 200.000, bevorzugt von 21.000 bis 120.000.

Als Poly- oder Copolykondensate der Terephthalsäure eignen sich in bevorzugten Ausführungsformen der Erfindung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-% Terephthalsäurereste, bezogen auf die Dicarbonsäurekomponente, und mindestens 80 Mol-%, vorzugsweise mindestens 90 Mol-% Ethylenglykol- und/oder Butandiol-1,4- und/oder 1,4-Cyclohexandimethanol-Reste, bezogen auf die Diolkomponente.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie beispielsweise Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykol-Resten bis zu 80 Mol-% anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, Cyclohexandimethanol-1,4, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit.

Vorzugsweise wird nicht mehr als 1 Mol-% des Verzweigungsmittels, bezogen auf die Säurekomponente, verwendet.

Besonders bevorzugt sind Polyalkylenterephthalate, die allein aus Terephthalsäure und deren reaktionsfähigen Derivaten (z. B. deren Dialkylestern) und Ethylenglykol und/oder Butandiol-1,4 und/oder 1,4-Cyclohexandimethanol-Reste hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente vorzugsweise verwendeten Polyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In besonders bevorzugten Ausführungsformen der Erfindung handelt es sich bei dem Blend von wenigstens einem Polycarbonat oder Copolycarbonat mit wenigstens einem Poly- oder Copolykondensat der Terephthalsäure um einen Blend aus wenigstens einem Polycarbonat oder Copolycarbonat mit Poly- oder Copolybutylenterephthalat oder glycol-modifiziertem Poly- oder Copolycyclohexandimethylenterephthalat. Bei einem solchen Blend aus Polycarbonat oder Copolycarbonat mit Poly- oder Copolybutylenterephthalat oder glycol-modifiziertem Poly- oder Copolycyclohexandimethylenterephthalat kann es sich bevorzugt um einen solchen mit 1 bis 90 Gew.-% Polycarbonat oder Copolycarbonat und 99 bis 10 Gew.-% Poly- oder Copolybutylenterephthalat oder glycol-modifiziertem Poly- oder Copolycyclohexandimethylenterephthalat, vorzugsweise mit 1 bis 90 Gew.-% Polycarbonat und 99 bis 10 Gew.-% Polybutylenterephthalat oder glycol-modifiziertem Polycyclohexandimethylenterephthalat handeln, wobei sich die Anteile zu 100 Gew.-% addieren. Besonders bevorzugt kann es sich bei einem solchen Blend aus Polycarbonat oder Copolycarbonat mit Poly- oder Copolybutylenterephthalat oder glycol-modifiziertes Poly- oder Copolycyclohexandimethylenterephthalat um einen solchen mit 20 bis 85 Gew.-% Polycarbonat oder Copolycarbonat und 80 bis 15 Gew.-% Poly- oder Copolybutylenterephthalat oder glycol-modifiziertem Poly- oder Copolycyclohexandimethylenterephthalat, vorzugsweise mit 20 bis 85 Gew.-% Polycarbonat und 80 bis 15 Gew.-% Polybutylenterephthalat oder glycol-modifiziertem Polycyclohexandimethylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat oder glycol-modifiziertem Poly- oder Copolycyclohexandimethylenterephthalat um einen solchen mit 35 bis 80 Gew.-% Polycarbonat oder Copolycarbonat und 65 bis 20 Gew.-% Poly- oder Copolybutylenterephthalat oder glycol-modifiziertem Poly- oder Copolycyclohexandimethylenterephthalat, vorzugsweise mit 35 bis 80 Gew.-% Polycarbonat und 65 bis 20 Gew.-% Polybutylenterephthalat oder glycol-modifiziertem Polycyclohexandimethylenterephthalat handeln, wobei sich die Anteile zu 100 Gew.-% addieren. In ganz besonders bevorzugten Ausführungsformen kann es sich um Blends aus Polycarbonat und glycol-modifiziertem Polycyclohexandimethylenterephthalat in den vorangehend genannten Zusammensetzungen handeln.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Beispiele für geeignete Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kemalkylierte und kernhalogenierte Verbindungen.

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Bevorzugte Dihydroxyarylverbindungen sind beispielsweise Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl -4-hydroxyphenyl)-2-methylbutan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-4-methyl-cylohexan, 1,3-Bis-[2-(4-hydroxyphenyl)-2-propyl]-benzol, 1,1'- Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydioxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol oder Dihydroxydiphenylcycloalkane der Formel (Ia) 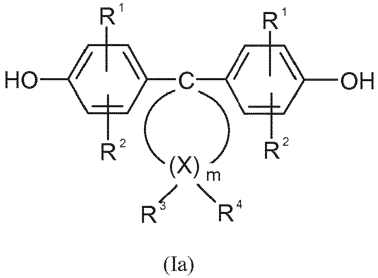 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl und
X Kohlenstoff bedeuten,
mit der Maßgabe, dass an mindestens einem Atom X, R³ und R⁴ gleichzeitig Alkyl bedeuten. Bevorzugt sind in der Formel (Ia) an einem oder zwei Atom(en) X, insbesondere nur an einem Atom X R³ und R⁴ gleichzeitig Alkyl.

Bevorzugter Alkylrest für die Reste R³ und R⁴ in Formel (Ia) ist Methyl. Die X-Atome in alpha-Stellung zu dem Diphenylsubstituierten C-Atom (C-1) sind bevorzugt nicht dialkylsubstituiert, dagegen ist die Alkyldisubstitution in beta-Stellung zu C-1 bevorzugt. Besonders bevorzugte Dihydroxydiphenylcycloalkane der Formenl (Ia) sind solche mit 5 und 6 Ring-C-Atomen X im cycloaliphatischen Rest (m = 4 oder 5 in Formel (Ia)), beispielsweise die Diphenole der Formeln (Ia-1) bis (Ia-3),

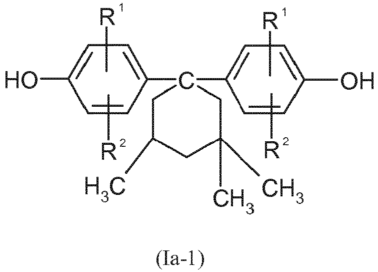

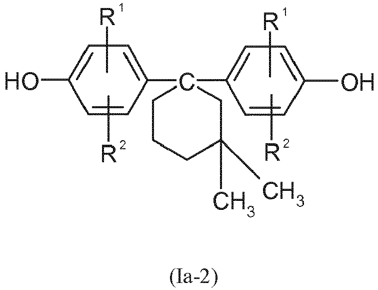

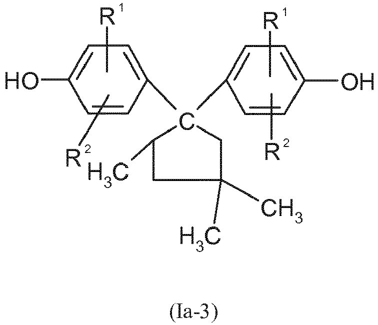

Ein ganz besonders bevorzugtes Dihydroxydiphenylcycloalkane der Formenl (Ia) ist 1,1-Bis-(4-hydroxyphenyl)-3,3,5-trimethyl-cyclohexan (Formel (Ia-1) mit R¹ und R² gleich H).

Solche Polycarbonate können gemäß der EP-A 359 953 aus Dihydroxydiphenylcycloalkanen der Formel (Ia) hergestellt werden.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydioxyphenyl)-1-phenyl-ethan, Bis-(4-hydioxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl und 2,2-Bis-(4-hydroxyphenyl)-propan.

Es können sowohl eine Dihydroxyarylverbindung unter Bildung von Homopolycarbonaten als auch verschiedene Dihydroxyarylverbindungen unter Bildung von Copolycarbonaten verwendet werden. Es können sowohl eine Dihydroxyarylverbindung der Formel (I) oder (Ia)unter Bildung von Homopolycarbonaten als auch mehrere eine Dihydroxyarylverbindungen der Formel (I) und/oder (Ia) unter Bildung von Copolycarbonaten verwendet werden. Dabei können die verschiedenen Dihydroxyarylverbindungen sowohl statistisch als auch blockweise miteinander verknüpft sein. Im Falle von Copolycarbonaten aus Dihydroxyarylverbindungen der Formel (I) und (Ia), beträgt das molare Verhältnis von Dihydroxyarylverbindungen der Formel (Ia) zu den gegebenenfalls mitzuverwendenden anderen Dihydroxyarylverbindungen der Formel (I) vorzugsweise zwischen 99 Mol-% (Ia) zu 1 Mol-% (I) und 2 Mol-% (Ia) zu 98 Mol-% (I), vorzugsweise zwischen 99 Mol-% (Ia) zu 1 Mol-% (I) und 10 Mol-% (Ia) zu 90 Mol-% (I) und insbesondere zwischen 99 Mol-% (Ia) zu 1 Mol-% (I) und 30 Mol-% (Ia) zu 70 Mol-% (I).

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan Dihydroxyarylverbindungen der Formel (Ia) und (I) hergestellt werden.

Geeignete Kohlensäurederivate können beispielsweise Diarylcarbonate der allgemeinen Formel (II) sein, 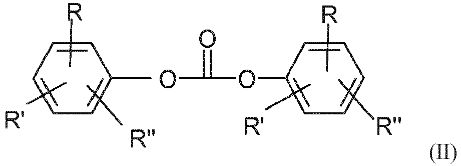 worin
R, R' und R" unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch - COO-R‴ bedeuten kann, wobei R‴ für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenylcarbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl] -carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat. Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 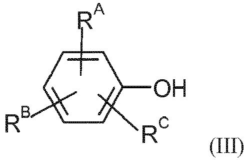 wobei
R^{A} für lineares oder verzweigtes C₁-C₃₄-Alkyl, C₇-C₃₄-Alkylaryl, C₆-C₃₄-Aryl oder für - COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
R^{B}, R^{C} unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Solche Monohydroxyarylverbindungen sind beispielsweise 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat. Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl] -propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure(trichlorid), Cyanursäuretrichlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Das Kunststoffteil enthaltend die vorstehend genannten thermoplastischen Polymere kann extrudiert, co-extrudiert, gegossen, dreidimensional gedruckt und/oder spritzgegossen sein. Es kann sich bei dem Kunststoffteil auch um ein dreidimensionales Kunststoffteil handeln.

Weiterhin ist es möglich, dass es sich bei dem Kunststoffteil auch um Kunststoffteile umfassend einen Schichtaufbau wie beispielsweise Folien, Folienschichtverbunde und/oder Platten handeln kann, als auch um deren Kombinationen z.B. hinterspritzte Folien, die die vorstehend beschriebenen Polymere enthalten. Besonders bevorzugt ist das Kunststoffteil ein Schichtaufbau enthaltend wenigstens eine Schicht eines thermoplastischen Kunststoffs enthaltend die vorstehend genannten Polymere, der durch Extrusion und/oder Coextrusion hergestellt werden kann.

Das Färbungsbad kann auf eine Temperatur bis 99 °C erwärmt werden. Hierdurch kann die Intensität der partiellen Einfärbung je nach verwendetem Polymer im Kunststoffteil verbessert werden. Bei Bestrahlung der Kunststoffteile in einem Autoklaven kann das Färbungsbad auch auf 150°C erwärmt werden, wenn das die Wärmeformbeständigkeit der Kunststoffteile zulässt. In einer bevorzugten Ausführungsform des erfindungsgemäßen Verfahrens beträgt die Temperatur des Färbungsbads ≤ 70 °C, bevorzugt ≥ 10 °C bis ≤ 60 °C, besonders bevorzugt ≥ 15°C bis ≤ 50°C.

Das Färbungsbad kann mindestens ein Farbmittel, vorzugsweise mindestens einen Farbstoff, besonders bevorzugt mindestens einen Farbstoff der Gruppe Solvent Dyes und/oder Dispers Dyes gemäß Klassifizierung des Colour Index oder Mischungen aus diesen Farbstoffen umfassen.

Der Colour Index (CI) der Society of Dyers and Colourists und der American Association of Textile Chemists and Colorists charakterisiert alle Farbmittel eindeutig durch den Gruppennamen und den Zahlen für die chemische Zusammensetzung bzw. chemische Struktur.

Farbstoffe der Gruppe der Solvent Dyes gemäß Klassifizierung des Colour Index können beispielsweise die sogenannten Macrolex^{™} Farbstoffe der Firma Lanxess AG, Deutschland sein. Beispielhaft genannt sind Macrolex^{™} Blau 3R, Macrolex^{™} Rot H, Macrolex^{™} Gelb 6G (Solvent Yellow 179 gemäß CI), Macrolex^{™} Violet Rot R (Dispers Violet 31 gemäß CI), Macrolex^{™} orange R (Solvent Orange 107 gemäß CI) oder Mischungen aus diesen Farbstoffe.

Farbstoffe der Gruppe der Dispers Dyes gemäß Klassifizierung des Colour Index können beispielsweise Diazo-, Diphenylamin- und Anthrachinonverbindungen, Acetatfarbstoffe, Dispersionsfarbstoffe und/oder Dispersolfarbstoffe sein und schließen Dispers-Blau #3, Dispers-Blau #14, Dispers-Gelb #3, Dispers-Rot #134 und Dispers-Rot #7 ein. Die Klassifikation und Bezeichnung der vorstehend zitierten Farbstoffe stimmen mit "The Colour Index", 3. Ausgabe, gemeinsam veröffentlicht von the Society of Dyes and Colors und the American Association of Textile Chemists and Colorists (1971) überein. Die Farbstoffe können ganz allgemein entweder als einziger Farbstoffbestandteil oder als Komponente einer Mischung in Abhängigkeit von der gewünschten Farbe angewandt werden. Somit schließt der hier verwendete Begriff des Farbstoffs auch die Farbstoffmischung ein.

Unter den geeigneten Farbstoffen sind wasserunlösliche Diazo-Diphenylamin- und Anthrachinonverbindungen zu nennen. Besonders geeignet sind Acetat-Farbstoffe, dispergierte Acetat-Farbstoffe, Dispersionsfarbstoffe und Dispersol-Farbstoffe, wie sie im Colour Index 3. Auflage, Band 2, The Societey of Dyers and Colourists, 1971, S. 2479 bzw. 2187-2743 offenbart sind.

Die bevorzugten dispergierten Farbstoffe schließen Dystar's Palanil^{™} Blau E-R150 (Anthrachinon/Dispers-Blau), DIANIX^{™} Orange E-3RN (Azofarbstoff/Cl Dispers-Orange 25) und die vorstehend genannten Macrolex^{™} Farbstoffe als Solvent Dyes ein.

In einer Ausführungsform umfasst das Färbungsbad:
a) Lösungsmittel und/oder Dispergiermittel, vorzugsweise Wasser und/oder organisches Lösungsmittel, besonders bevorzugt Wasser
b) mindestens ein Farbmittel, vorzugsweise mindestens einen Farbstoff, besonders bevorzugt mindestens einen Farbstoff der Solvent Dyes und/oder Dispers Dyes gemäß Klassifizierung des Colour Index oder einer Mischung aus den genannten.

Vorteilhaft haben sich solche Färbungsbäder erwiesen, die zum gleichmäßigen Einfärben von Polycarbonat-Kunststoffteilen bei Temperaturen > 80 °C geeignet sind. Diese werden beispielsweise beschrieben in WO-A 03/ 040461, EP-A 2050866, WO-A 03/083207. Unter den Bedingungen des erfindungsgemäßen Verfahrens erfolgt im Wesentlichen eine partielle Einfärbung des Kunststoffteils an den bestrahlten Bereichen, so dass genau an diesen Stellen eine intensive Gravur sichtbar wird.

In einer weiteren Ausführungsform der Erfindung umfasst daher das Färbungsbad zusätzlich zu den bereits genannten Komponenten a) und b)
c) mindestens ein weiteres Lösungsmittel gemäß der Strukturformel (I)

   R-[(O-(CH₂)ₘ)ₙ-]OH (I),

   worin R ein Ethyl-, Propyl- oder Butylrest,
   m 2, 3 oder 4 und
   n 1, 2 oder 3 sind,
   mit der Maßgabe, dass wenn R Butyl ist, m 2 oder 4 ist,
d) mindestens ein Nivelliermittel gemäß der Strukturformel (II):

   H-[(O-(CH₂)ₘ)ₙ-]OH (II),

   worin m 2, 3 oder 4 und
   n 1, 2 oder 3 sind.

Die Komponenten a) bis d) können in den folgenden Mengen bezogen auf das Gesamtgewicht des Färbungsbades enthalten sein:
a) 50,0 bis 99,99 Gew.-%, vorzugsweise 62,5 bis 90,0 Gew.-%, besonders bevorzugt 65,0 bis 85,0 Gew.-%,
b) 0,01 bis 15,0 Gew.-%, vorzugsweise 0,1 bis 5,0 Gew.-%, besonders bevorzugt 0,2 bis 4,0 Gew.-%,
c) 0 bis 35,0 Gew.-%, vorzugsweise 1,0 bis 30,0 Gew.-%, besonders bevorzugt 5,0 bis 25,0 Gew.-%,
d) 0 bis 30,0 Gew.-%, vorzugsweise 1,0 bis 20,0 Gew.-%, besonders bevorzugt 3,0 bis 15,0 Gew.-%.

In einer weiteren Ausführungsform des erfindungsgemäßen Verfahren umfasst das Färbungsbad einen Farbstoff und/oder eine Farbstoffmischung ausgewählt aus der Gruppe der Dispers Dyes gemäß Klassifizierung des Colour Index, ganz besonders einen Farbstoff ausgewählt aus der Gruppe bestehend aus Azo-, Diphenylamin- und Anthrachinonverbindungen.

In einer anderen bevorzugten Ausführungsform des erfindungsgemäßen Verfahrens umfasst das Färbungsbad einen Farbstoff und/oder eine Farbstoffmischung aus der Gruppe der Solvent Dyes gemäß Klassifizierung des Colour Index, ganz besonders bevorzugt einen Farbstoff und/oder Farbstoffmischung der Makrolex^{™} Farbstoffe.

Als Lösungsmittel und/oder Dispergiermittel a) kann Wasser und/oder organische Lösungsmittel eingesetzt werden. Vorzugsweise wird Wasser eingesetzt.

Als organische Lösungsmittel kommen alle gängigen Lösungsmittel in Frage, die das Kunststoffteil bei Kontakt nicht angreifen. Beispielhaft genannt sind Butylalkohol, Butylenglykol, Diethylenglykol, Ethylalkohol, Ethylenglykol, Heptan, Hexan, Pentan, Propargylalkohol, Propylalkohol oder Mischungen der vorstehend genannten.

Vorzugsweise wird im erfindungsgemäßen Verfahren Wasser und eine Verbindung der Komponente c) eingesetzt.

Die Bestrahlung des Kunststoffteils in Schritt iii) erfolgt mit fokussierter nicht-ionisierender elektromagnetischer Strahlung, wobei der Wellenlängenbereich der fokussierten nicht-ionisierenden elektromagnetischen Strahlung so gewählt wird, dass das Färbungsbad eine Lichtdurchlässigkeit von ≥ 10 % bis ≤ 99%, bevorzugt von ≥ 30 % bis ≤ 95 %, besonders bevorzugt ≥ 40 % bis ≤ 93% bestimmt nach ISO 13468-2 aufweist.

In einer vorteilhaften Ausführungsform der Erfindung erfolgt die Bestrahlung in Schritt iii) mit Laserstrahlung, wobei das Färbungsbad eine Lichtdurchlässigkeit von ≥ 10 % bis ≤ 99%, bevorzugt von ≥ 30 % bis ≤ 95 %, besonders bevorzugt ≥ 40 % bis ≤ 93% bestimmt nach ISO 13468-2 aufweist. Vorzugsweise erfolgt die Laserstrahlung mit einer Wellenlänge im Bereich von ≥ 0,70 µm bis ≤ 1000 µm, vorzugsweise im Bereich von ≥ 1,0 µm bis ≤ 50 µm, besonders bevorzugt im Bereich von ≥ 1,0 µm bis ≤ 2,5 µm.

Sofern die Bestrahlung mit dem Laser erfolgt, kann dies im Dauerstrichbetrieb (CW-Laser) erfolgen. Besonders bevorzugt wird gepulste Laserstrahlung für die Bestrahlung der Kunststoffteile eingesetzt. Hierbei ist bereits eine Pulsdauer des Lasers von Bruchteilen von Sekunden ausreichend, um an den Laser-bestrahlten Stellen eine Färbung des Kunststoffteils zu erzielen. Vorzugsweise werden Pulsdauern von 10⁻¹⁸ bis 10⁻¹ Sekunden, besonders bevorzugt Pulsdauern von 10⁻⁹ bis 10⁻² Sekunden, ganz besonders bevorzugt Pulsdauern von 10⁻⁶ bis 10⁻³ Sekunden eingesetzt.

Durch Variation der Leistung des eingesetzten Laserstrahls für die Bestrahlung in Schritt iii) kann die Intensität der Einfärbung an den gelaserten Stellen beeinflusst werden, je nach dem welche Anforderung an die gewünschte Anwendung gestellt wird. Je höher die eingesetzte Laserleistung ist, desto intensiver wird die Einfärbung an den gelasterten Stellen des Kunststoffteils. Mit dem mittleren Leistungsbereich eines 7,5 Watt Markierungslasers können ausreichend gute farbige Gravuren erzielt werden. Im Pulsbetrieb können signifikant höhere Leistungen und damit auch intensivere Einfärbungen im Kunststoffteil erzielt werden.

Vorzugsweise werden im erfindungsgemäßen Verfahren NdYAG-Laser (Neodym-dotierte Yttrium-Aluminium-Granat-Laser) eingesetzt. Je kürzer die Pulse desto höher die Pulsspitzenleistungen. Bei Pulslängen von 15 ns bis 400 ns können Pulsspitzen von 100 kJ erzielt werden.

Gemäß des erfindungsgemäßen Verfahren umfasst das Kunststoffteil wenigstens ein Additiv, welches im Wellenlängenbereich der eingesetzten fokussierten nicht-ionisierenden elektromagnetischen Strahlung ein Absorptionsmaximum aufweist oder das Kunststoffteil kann mit wenigstens einem Additiv beschichtet sein, welches im Wellenlängenbereich der eingesetzten fokussierten nicht-ionisierenden elektromagnetischen Strahlung ein Absorptionsmaximum aufweist.

Prinzipiell sind als Additiv alle lasersensitiven Additive geeignet, sogenannte Laser-Markier-Additive, d.h. solche aus einem Absorber im Wellenlängenbereich des zu verwendeten Lasers.

Vorzugsweise umfasst das Additiv mindestens einen oder mehrere organische und/oder anorganische IR-Absorber, vorzugsweise anorganische IR-Absorber. Solche Additive und deren Verwendung in Formmassen sind beispielsweise in WO-A 2004/50766 und WO-A 2004/50767 beschrieben und werden von der Fa. DSM unter dem Markennamen Micabs^{™} kommerziell angeboten.

Geeignete organische IR-Absorber sind beispielsweise Verbindungen, welche zwischen 700 und 2500 nm (Nahes Infrarot = NIR) eine möglichst hohe Absorption aufweisen. Geeignet sind beispielsweise literaturbekannte Infrarot-Absorber, wie sie z. B. in M. Matsuoka, Infrared Absorbing Dyes, Plenum Press, New York, 1990 stoffklassenmässig beschrieben sind. Besonders geeignet sind Infrarot-Absorber aus den Stoffklassen der Azo-, Azomethin-, Methin- Anthrachinon-, Indanthren-, Pyranthron-, Flavanthron-, Benzanthron-, Phtalocyanin-, Perylen-, Dioxazin-, Thioindigo- Isoindolin-, Isoindolinon-, Chinacridon-, Pyrrolopyrrol- oder Chinophtalonpigmente sowie Metallkomplexe von Azo-, Azomethin- oder Methinfarbstoffen oder Metallsalzen von Azoverbindungen. Davon sind ganz besonders Phthalocyanine und Naphthalocyanine geeignet. Aufgrund der verbesserten Löslichkeit in thermoplastischen Kunststoffen sind Phthalocyanine und Naphthalocyanine mit sperrigen Seitengruppen vorzuziehen.

Geeignete anorganische IR-Absorber sind beispielsweise Mischoxide von Metallen wie z.B. phosphorhaltige Zinn-Kupfer-Mischoxide, wie z.B. in WO-A 2006/042714 beschrieben, solche aus der Gruppe der Boride und/oder der Wolframate sowie deren Mischungen, vorzugsweise mindestens einen oder mehrere IR-Absorber aus der Gruppe der Boride und/oder Wolframate, sowie deren Mischungen, besonders bevorzugt mindestens einen oder mehrere IR-Absorber aus der Gruppe der Wolframate.

Als anorganische IR-Absorber aus der Gruppe der Boride sind beispielsweise Verbindungen vom Typ MₓB_{y} (M= La, Ce, Pr, Nd, Tb, Dy, Ho, Y, Sm, Eu, ER, Tm, Yb, Lu, Sr, Ti, Zr, Hf, V, Ta, Cr, Mo, W und Ca; und x und y einer ganzen Zahl von 1 bis 6) wobei Lanthanhexaborid (LaB₆), Praseodymiumborid (PrB₆), Neodymiumborid (NdB₆), Ceriumborid (CeB₆), Terbiumborid (TbB₆), Dysprosiumborid (DyB₆), Holmiumborid (HoB₆), Yttriumborid (YB₆), Samariumborid (SmB₆), Europiumborid (EuB₆), Erbiumborid (ErB₆), Thuliumborid (TmB₆), Ytterbiumborid (YbB₆), Lutetiumborid (LuB₆), Strontiumborid (SrB₆), Calciumborid (CaB₆), Titaniumborid (TiB₂), Zirconiumborid (ZrB₂), Hafniumborid (HfB₂), Vanadiumborid (VB₂), Tantalumborid (TaB₂), Chromborid (CrB and CrB₂), Molybdänborid (MoB₂, Mo₂B₅ and MoB), Wolframborid (W₂B₅), oder Kombinationen dieser Boride geeignet.

Als anorganische IR-Absorber aus der Gruppe der Wolframate sind beispielsweise auch solche aus der Gruppe der Wolframverbindungen vom Typ W_{y}O_{z} (W = Wolfram, O = Sauerstoff; z/y = 2,20 - 2,99) und/oder MₓW_{y}O_{z} (M = H, He, Alkalimetall, Erdalkalimetall, Metall aus der Gruppe der Seltenen Erden, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0,001-1,000; z/y = 2,2-3,0), wobei als M die Elemente H, Cs, Rb, K, Tl, In, Ba, Li, Ca, Sr, Fe und Sn bevorzugt sind, wobei hiervon Cs ganz besonders bevorzugt ist. Besonders bevorzugt sind Ba_{0,33}WO₃, Tl_{0,33}WO₃, K_{0,33}WO₃, Rb_{0,33}WO₃, Cs_{0,33}WO₃, Na_{0,33}WO₃, Na_{0,75}WO₃, sowie deren Gemische. In einer besonderen Ausführungsform der vorliegenden Erfindung ist die alleinige Verwendung von Cs_{0,33}WO₃ als anorganischem IR-Absorber ganz besonders bevorzugt. Ebenfalls bevorzugt sind Cs/W-Verhältnisse von 0,20 und 0,25.

Unter den anorganischen IR-Absorbern sind die Woframate den Boriden aufgrund ihrer geringen Eigenfärbung vorzuziehen, sofern das erfindungsgemäße Verfahren auf Kunststoffteilen erfolgen soll, die eine Lichtdurchlässigkeit von ≥ 10 % bis ≤ 99%, bevorzugt von ≥ 30 % bis ≤ 95 %, besonders bevorzugt ≥ 40 % bis ≤ 93% bestimmt nach ISO 13468-2 aufweisen.

Zur Herstellung derartiger Wolframate werden z.B. Wolframtrioxid, Wolframdioxid, ein Hydrat eines Wolframoxids, Wolframhexachlorid, Ammoniumwolframat oder Wolframsäure und gegebenenfalls weitere Salze enthaltend das Element M, wie z.B. Cäsiumcarbonat, in bestimmten stöchiometrischen Verhältnisse gemischt, so dass die molaren Verhältnisse der einzelnen Komponenten durch die Formel MₓW_{y}O_{z} wiedergegeben werden. Diese Mischung wird anschließend bei Temperaturen zwischen 100 °C und 850 °C in einer reduzierenden Atmosphäre, z.B. einer ArgonWasserstoff-Atmosphäre, behandelt und abschließend das erhaltene Pulver bei Temperaturen zwischen 550 °C und 1200 °C unter Inertgasatmosphäre getempert. Zur Herstellung der erfindungsgemäßen anorganischen IR-Absorber-Nanopartikel kann der IR-Absorber mit den unten beschriebenen Dispergiermitteln und weiteren organischen Lösemitteln, wie z.B. Toluol, Benzol oder ähnlichen aromatischen Kohlenwasserstoffen vermischt und in geeigneten Mühlen, wie z.B. Kugelmühlen, unter Zugabe von Zirkoniumoxid (z.B. mit einem Durchmesser von 0,3 mm) gemahlen werden, um die gewünschte Partikelgrößenverteilung herzustellen. Man erhält die Nanopartikel in Form einer Dispersion. Nach Mahlung können gegebenenfalls weitere Dispergiermittel zugesetzt werden. Das Lösungsmittel wird bei erhöhten Temperaturen und reduziertem Druck entfernt. Bevorzugt sind Nanopartikel, die eine mittlere Größe kleiner als 200 nm, besonders bevorzugt kleiner als 100 nm, aufweisen. Die Größe der Partikel kann mit Hilfe der Transmissionselektronenspektroskopie (TEM) bestimmt werden. Derartige Messungen an IR-Absorber-Nanopartikeln sind z.B. in Adachi et al., J. Am. Ceram. Soc. 2008, 91, 2897-2902, beschrieben.

Die Herstellung der erfindungsgemäßen Wolframate ist z.B. in EP 1 801 815 AI genauer beschrieben und sie sind kommerziell z.B. bei der Firma Sumitomo Metal Mining Co., Ltd. (Japan) unter der Bezeichnung YMDS 874 erhältlich.

Für den Einsatz in transparenten Thermoplasten mit einer Lichtdurchlässigkeit von ≥ 10 % bis ≤ 99%, bevorzugt von ≥ 30 % bis ≤ 95 %, besonders bevorzugt ≥ 40 % bis ≤ 93% bestimmt nach ISO 13468-2, werden die so erhaltenen Partikel in einer organischen Matrix dispergiert, z.B. in einem Acrylat, und ggf. wie oben beschrieben in einer Mühle unter Verwendung geeigneter Hilfsstoffe wie z.B. Zirkoniumdioxid und ggf. unter Verwendung von organischen Lösungsmitteln wie zum Beispiel Toluol, Benzol oder ähnlichen Kohlenwasserstoffen gemahlen.

Geeignete Polymer-basierte Dispergiermittel sind vor allem Dispergiermittel, die eine hohe Lichttransmission aufweisen, wie z.B. Polyacrylate, Polyurethane, Polyether, Polyester oder Polyesterurethane sowie davon abgeleitete Polymere.

Als Dispergiermittel bevorzugt sind Polyacrylate, Polyether und Polyester-basierte Polymere, wobei als hochtemperaturstabile Dispergiermittel Polyacrylate wie z.B. Polymethylmethacrylat und Polyester besonders bevorzugt sind. Es können auch Mischungen dieser Polymere oder auch Copolymere auf Acrylat-basis eingesetzt werden. Derartige Dispergierhilfsmittel und Methoden zur Herstellung von Wolframatdispersionen sind z.B. in der JP 2008214596 sowie in Adachi et al. J. Am. Ceram. Soc. 2007, 90 4059-4061, beschrieben. Für die vorliegende Erfindung geeignete Dispergiermittel sind kommerziell erhältlich.

Insbesondere sind Dispergiermittel auf Polyacrylat-Basis geeignet. Derart geeignete Dispergiermittel sind z.B. unter den Handelsnamen EFKA^{™}, z.B. EFKA^{™} 4500 und EFKA^{™} 4530 bei Ciba Specialty Chemicals erhältlich. Polyesterhaltige Dispergiermittel sind ebenfalls geeignet. Sie sind beispielsweise unter den Handelsnamen Solsperse^{™}, z.B. Solsperse^{™} 22000, 24000SC, 26000, 27000 von Avecia erhältlich. Ferner sind polyetherhaltige Dispergiermittel z.B. unter den Handelsnamen Disparlon^{™} DA234 und DA325 der Firma Kusumoto Chemicals bekannt. Auch Polyurethan basierte Systeme sind geeignet. Polyurethan-basierte Systeme sind unter dem Handelsnamen EFKA^{™} 4046, EFKA^{™} 4047 von Ciba Specialty Chemicals erhältlich. Texaphor^{™} P60 und P63 sind entsprechende Handelsnamen der Cognis.

Die Menge des IR-Absorbers im Dispergiermittel beträgt 0,2 Gew.-% bis 50,0 Gew.-%, bevorzugt 1,0 Gew.-% - 40,0 Gew.-%, weiter bevorzugt 5,0 Gew.-% - 35,0 Gew.-%, und am stärksten bevorzugt 10,0 Gew.-% - 30,0 Gew.-% bezogen auf die erfindungsgemäß eingesetzte Dispersion des anorganischen IR-Absorbers. In der Gesamtzusammensetzung der gebrauchsfertigen IR- Absorberformulierung können neben dem IR-Absorber-Reinstoff und dem Dispergiermittel noch weitere Hilfsstoffe wie zum Beispiel Zirkoniumdioxid sowie Restlösemittel wie zum Beispiel Toluol, Benzol oder ähnliche aromatische Kohlenwasserstoffe enthalten sein.

Hinsichtlich der Menge der erfindungsgemäßen anorganischen IR-Absorbern, besonders bevorzugt solche aus der Gruppe der Wolframate, in den erfindungsgemäßen Polymer-Zusammensetzungen der Kunststoffteile liegen keinerlei Beschränkungen vor. Üblicherweise können die anorganischen IR-Absorber, insbesondere die Wolframate, aber in einer Menge von ≥ 0,7% Gew.-% bis ≤ 4,5 Gew.- %, bevorzugt ≥ 0,6 Gew.-% bis ≤ 2 Gew.-% und besonders bevorzugt ≥ 0,7 Gew.-% bis ≤ 1,5 Gew.-%> berechnet als Feststoffanteil an anorganischem IR-Absorber, in der Polymer-Gesamtzusammensetzung eingesetzt werden.

Feststoffanteil an anorganischem IR-Absorber, insbesondere Wolframat, meint in diesem Zusammenhang den anorganischen IR-Aborber, insbesondere das Wolframat, als Reinstoff und nicht eine Dispersion, Suspension oder andere Zubereitung, enthaltend den Reinstoff, wobei sich auch die folgenden Angaben für Gehalt an IR-Additiv, insbesondere den Wolframatgehalt, immer auf diesen Feststoffanteil beziehen, soweit nicht explizit anders angegeben.

In einer weiteren Ausführungsform können optional neben den Wolframaten als IR-Absorber zusätzlich weitere IR-Absorber verwendet werden, wobei deren Anteil bezüglich Menge in einer derartigen Mischung aber jeweils unterhalb derer der oben beschriebenen Wolframate liegt. Bei Mischungen sind hierbei Zusammensetzungen bevorzugt, die zwei bis einschließlich fünf und besonders bevorzugt zwei oder drei unterschiedliche IR-Absorber enthalten. Der weitere IR-Absorber ist vorzugsweise ausgewählt aus der Gruppe der Boride und Zinnoxide, besonders bevorzugt LaB₆ oder Antimon dotiertes Zinnoxid oder Indiumzinnoxid enthält.

Derartige Mischungen von IR- Absorber finden überwiegend bei Anwendungen statt, bei welchen eine Eigenfärbung des Bauteils bis zu einem Delta E von 20, vorzugsweise bis zu einem Delta E von 15, im Vergleich zum Kunststoffteil ohne IR-Absorber akzeptiert werden kann.

In einer alternativen Ausführungsform der Erfindung kann das Kunststoffteil mit einem Additiv in Form eines Beschichtungsmittels beschichtet sein, welches im Wellenlängenbereich der eingesetzten fokussierten nicht-ionisierenden elektromagnetischen Strahlung ein Absorptionsmaximum aufweist. Vorzugsweise umfassen diese Beschichtungsmittel einen IR-Absorber, welche im Bereich der Wellenlänge von ≥ 0,70 µm bis ≤ 1000 µm, vorzugsweise im Bereich von ≥ 1,0 µm bis ≤ 50 µm, besonders bevorzugt im Bereich von ≥ 1,0 µm bis ≤ 2,5 µm absorbieren. Diese Beschichtungsmittel sind beispielsweise unter Clearweld^{™} kommerziell erhältlich unter der Bezeichnung LD920, LD930 oder LD940.

Das wenigstens eine Additiv, welches im Wellenlängenbereich der eingesetzten fokussierten nicht-ionisierenden elektromagnetischen Strahlung ein Absorptionsmaximum aufweist ist erfindungsgemäß im Kunststoffteil enthalten.

Im erfindungsgemäßen Verfahren kann die Tauchtiefe des Kunststoffteils in das Färbungsbad in Schritt i) Einfluss auf die Intensität der Einfärbung nach der Bestrahlung in Schritt iii) haben. Unter Tauchtiefe versteht man im Sinne dieser Erfindung die Eindringtiefe der eingesetzten Strahlung in das Färbungsbad bis zur Oberfläche des Kunststoffteils, auf das die partielle Einfärbung aufgebracht werden soll. Insgesamt sollte die Tauchtiefe nicht zu tief sein, da die Intensität der eingesetzten Strahlung abnimmt, je größer die Eindringtiefe der eingesetzten Strahlung in das Färbungsbad bis zur Kunststoffoberfläche ist. Idealerweise beträgt die Tauchtiefe des Kunststoffteils in das Färbungsbad in Schritt i) in einer Ausführungsform ≤ 120 mm, vorzugsweise 0,01 bis 100 mm, besonders bevorzugt 0,1 bis 20 mm und ganz besonders bevorzugt 0,1 bis 5,0 mm.

Sofern die Oberfläche des Kunststoffteils speziell vorbehandelt wird, um die Oberflächenenergie zu erhöhen, beispielsweise durch Plasmabehandlung, Koronabehandlung, Beflammen oder chemische Behandlung der Kunststoffteile, können noch geringere Tauchtiefen des Kunststoffteils in Schritt i) erzielt werden. Beispielsweise kann durch die verbesserte Benetzung der Kunststoffoberfläche durch das Färbungsbad die Tauchtiefe nur 0,015 mm betragen.

Die Farbkonzentration des Färbungsbads kann auch einen Einfluss auf die Intensität der partiellen Einfärbung des Kunststoffteils nach der Bestrahlung haben. Bevorzugt ist eine Konzentration an Farbstoff b) von 0,01 bis 15,0 Gew.%, besonders bevorzugt von 0,1 bis 5,0 Gew.%, ganz besonders bevorzugt von 0,2 bis 4,0 Gew.% bezogen auf das Gesamtgewicht des Färbungsbads.

In einer Ausführungsform des erfindungsgemäßen Verfahrens wird ein Formteil aus Kunststoff, welches in einem Spritzgießwerkzeug nach bekannten Verfahren wie beispielsweise gemäß dem In-Mold-Decoration (IMD), Film-Insert-Molding (FIM) oder High-Pressure-Forming (HPF) Verfahren hergestellt wird, eingesetzt.

Zur Vermeidung von Wiederholungen wird in den folgenden Ausführungsformen des Kunststoffteils, welches im erfindungsgemäßen Verfahren eingesetzt werden kann, auf die vorstehenden Ausführungsformen hinsichtlich Material, Zusammensetzung des thermoplastischen Kunststoffs und auch des Additivs sowie auf die Ausführungsformen des Verfahrens an sich, auf das Vorstehende verwiesen.

In einer vorteilhaften Ausführungsform der Erfindung umfasst das Kunststoffteil wenigstens eine Schicht eines thermoplastischen Kunststoffs, wobei diese wenigstens eine Schicht eines thermoplastischen Kunststoffs wenigstens ein Additiv umfasst, welches im Wellenlängenbereich der eingesetzten fokussierten nicht-ionisierenden elektromagnetischen Strahlung ein Absorptionsmaximum aufweist oder wobei das Kunststoffteil mit wenigstens einem Additiv in Form eines Beschichtungsmittels beschichtet ist, welches im Wellenlängenbereich der eingesetzten fokussierten nicht-ionisierenden elektromagnetischen Strahlung ein Absorptionsmaximum aufweist. Vorzugsweise bildet diese wenigstens eine Schicht eines thermoplastischen Kunststoffs eine äußere Schicht des Kunststoffteils. Besonders bevorzugt in dieser Ausführungsform handelt es sich bei dieser wenigstens einen Schicht eines thermoplastischen Kunststoffs um eine Schicht eines thermoplastischen Kunststoffs welcher eine Lichtdurchlässigkeit von von ≥ 10 % bis ≤ 99%, bevorzugt von ≥ 30 % bis ≤ 9.5 %, besonders bevorzugt ≥ 40 % bis ≤ 93% bestimmt nach ISO 13468-2 aufweist.

In einer anderen Ausführungsform handelt es sich bei dem Kunststoffteil um einen Schichtaufbau, wobei dieser Schichtaufbau, wenigstens eine Schicht eines thermoplastischen Kunststoffs ("Schicht a)") umfasst, wobei diese wenigstens eine Schicht a) wenigstens eine äußere Schicht des Schichtaufbaus bildet und wenigstens ein Additiv umfasst, welches im Wellenlängenbereich der eingesetzten fokussierten nicht-ionisierenden elektromagnetischen Strahlung ein Absorptionsmaximum aufweist oder wobei dieser Schichtaufbau, wenigstens eine Schicht eines thermoplastischen Kunststoffs ("Schicht a')") umfasst, wobei diese wenigstens eine Schicht a') wenigstens eine äußere Schicht des Schichtaufbaus bildet und diese äußere Schicht a') mit wenigstens einem Additiv in Form eines Beschichtungsmittels beschichtet ist, welches im Wellenlängenbereich der eingesetzten fokussierten nicht-ionisierenden elektromagnetischen Strahlung ein Absorptionsmaximum aufweist.

In einer weiteren Ausführungsform handelt es sich bei dem Kunststoffteil um einen Schichtaufbau, wobei dieser Schichtaufbau, wenigstens eine Schicht eines thermoplastischen Kunststoffs ("Schicht a)") umfasst, wobei diese wenigstens eine Schicht a) wenigstens eine äußere Schicht des Schichtaufbaus bildet und wenigstens ein Additiv umfasst, welches im Wellenlängenbereich der eingesetzten fokussierten nicht-ionisierenden elektromagnetischen Strahlung ein Absorptionsmaximum aufweist, und wenigstens eine weitere Schicht eines thermoplastischen Kunststoffs ("Schicht b)") umfasst.

In einer anderen Ausführungsform handelt es sich bei dem Kunststoffteil um einen Schichtaufbau, wobei dieser Schichtaufbau, wenigstens eine Schicht eines thermoplastischen Kunststoffs ("Schicht a)") umfasst, wobei diese wenigstens eine Schicht a) wenigstens eine äußere Schicht des Schichtaufbaus bildet und wenigstens ein Additiv umfasst, welches im Wellenlängenbereich der eingesetzten fokussierten nicht-ionisierenden elektromagnetischen Strahlung ein Absorptionsmaximum aufweist, und wobei dieser Schichtaufbau wenigstens eine weitere Schicht eines thermoplastischen Kunststoffs ("Schicht b)") umfasst, und wobei dieser Schichtaufbau wenigstens eine weitere Schicht a) umfasst, diese wenigstens eine weitere Schicht a) wenigstens ein Additiv umfasst, welches im Wellenlängenbereich der eingesetzten fokussierten nicht-ionisierenden elektromagnetischen Strahlung ein Absorptionsmaximum aufweist, und wobei die beiden Schichten a) jeweils eine äußere Schicht des Schichtaufbaus darstellen.

Die vorstehend beschriebenen Ausführungsformen der Erfindung, können weiterhin wenigstens ein Schwarzpigment, bevorzugt Ruß, enthalten. Vorzugsweise ist das wenigstens eine Schwarzpigment, vorzugsweise Ruß, in der Schicht a) oder Schicht a') und/oder in der Schicht b) enthalten. Besonders bevorzugt ist das wenigstens eine Schwarzpigment, vorzugsweise Ruß, in der Schicht b) enthalten. Vorzugsweise ist das wenigstens eine Schwarzpigment, vorzugsweise Ruß, in einer Menge von 5 bis 100 ppm, vorzugsweise von 9 bis 50 ppm, ganz besonders bevorzugt von 10 bis 40 ppm enthalten.

Die Ausführungsformen, die zusätzlich wenigstens ein Schwarzpigment, vorzugsweise Ruß, enthalten, eignen sich zum Lasergravieren in Schwarz-Weiß, insbesondere für die personalisierte Lasergravur von Sicherheitsdokumenten, und ganz besonders von Identifikationsdokumenten. Schichtaufbauten, die zum Lasergravieren in Schwarz-Weiß geeignet sind, sind beispielsweise bekannt aus WO-A 2010/089035. Sofern neben der erfindungsgemäßen farbigen Lasergravur eine Schwarz-Weiß-Lasergravur erfolgen soll, erfolgt die Schwarz-Weiß-Lasergravur in Abwesenheit des Färbungsbads.

In einer weiteren Ausführungsform handelt es sich bei dem Kunststoffteil um einen Schichtaufbau, wobei dieser Schichtaufbau, wenigstens eine Schicht eines thermoplastischen Kunststoffs ("Schicht a)") umfasst, wobei diese wenigstens eine Schicht a) wenigstens eine äußere Schicht des Schichtaufbaus bildet und wenigstens ein Additiv umfasst, welches im Wellenlängenbereich der eingesetzten fokussierten nicht-ionisierenden elektromagnetischen Strahlung ein Absorptionsmaximum aufweist, und wobei dieser Schichtaufbau wenigstens eine weitere Schicht eines thermoplastischen Kunststoffs ("Schicht b)"), umfassend wenigstens ein Schwarzpigment, vorzugsweise Ruß, aufweist, und wobei die wenigstens eine Schicht a) eine Schichtdicke von 5 bis 30 µm, vorzugsweise 8 bis 25 µm aufweist. Vorzugsweise weist in dieser Ausführungsform die Schicht b) eine Schichtdicke von 30 µm bis 375 µm, besonders bevorzugt von 50 µm bis 250 µm und ganz besonders bevorzugt von 75 µm bis 200 µm, auf und besonders bevorzugt umfasst das Schwarzpigment, vorzugsweise Ruß, in einer Menge von 5 bis 180 ppm, vorzugsweise von 5 bis 100 ppm.

In einer anderen Ausführungsform kann der Schichtaufbau wie in den vorstehenden Ausführungsformen beschrieben, zusätzlich wenigstens einen Füllstoff aufweisen. Bei dem Füllstoff handelt es sich bevorzugt um wenigstens ein Farbpigment und/oder wenigstens einen sonstigen Füllstoff zur Erzeugung einer Transluzenz der gefüllten Schichten, besonders bevorzugt um ein Weißpigment, ganz besonders bevorzugt um Titandioxid, Zirkoniumdioxid oder Bariumsulfat, in einer bevorzugten Ausführungsform um Titandioxid.

Dieser Füllstoff kann in den vorstehenden Ausführungsformen vorzugsweise entweder in der Schicht b) enthalten sein, oder aber in einer weiteren Schicht eines thermoplastischen Kunststoffs ("Schicht c)") enthalten sein.

Das Füllen einer Schicht enthaltend wenigstens einen thermoplastischen Kunststoff mit wenigstens einem solchen Füllstoff verbessert die Sichtbarkeit der eingebrachten Beschriftung bzw. Abbildung(en), wodurch auch die Wahrnehmung der verbesserten Schärfe und Auflösung weiter erhöht wird. Dieser Schichtaufbau ist bekannt aus der WO-A 2010/089035 und wird dort ausführlich beschrieben.

Mit den vorstehend genannten Schichtaufbauten besteht die Möglichkeit, die erfindungsgemäße farbige Lasergravur mit der schwarzen Lasergravur zu kombinieren. Hierzu wird das Kunststoffteil, umfassend einen der vorstehend beschriebenen Schichtaufbauten, in Abwesenheit des Färbungsbads vor oder nach der erfindungsgemäßen farbigen Lasergravur mit dem gleichen Laserstrahl bestrahlt, um die schwarze Gravur auf die Oberfläche des Schichtaufbaus an der gewünschten Stelle aufzubringen. Die hohe Laserreaktivität dieser Schichtaufbauten führt bei Lasergravur außerhalb des Färbungsbads zu einer Schwärzung an den mit Laser bestrahlten Stellen.

### Beispiele

### I. Zusammensetzung des Färbungsbades

69,31 Gew.-% Wasser
0,99 Gew.-% Macrolex^{™} Blau 3R (Farbstoff, der Firma Lanxess AG Deutschland)
19,8 Gew.-% Ethylenglykolbutylether (EGBE), (Lösungsmittel, The Dow Chemical Company)
9,9 Gew.-% Teile Diethylenglykol (DEG), (Nivelliermittel, Merck KGaA)

### II. Verfahren zum farbiges Lasergravieren

Zur Laserbestrahlung wurde ein NdYAG Laser der Firma Foba verwendet, Model D84 mit einer Laserleistung von ca. 7,5 Watt, einer Laserfrequenz von 8 KHz im Pulsbetrieb und einer Stromstärke von 8 A. Die Vorschubgeschwindigkeit des Lasers, Tauchtiefe und die Temperatur des Färbungsbads für die nachstehenden Beispiele ist in Tabelle 1 angegeben. Die Folien bzw. das Formteil der Beispiele 1 bis 3 wurden in das Färbungsbad gemäß der Angaben in Tabelle 1 eingetaucht. Das Färbungsbad mit der Folie bzw. dem Formteil wurde auf den Werkstückträger einer Foba D84S Laseranlage platziert. Der Fokus des Lasers wurde auf die Folienoberfläche justiert. Die Angabe zur Tauchtiefe ist der Tabelle 1 zu entnehmen. Unter Tauchtiefe versteht man im Sinne dieser Erfindung die Eindringtiefe der eingesetzten Strahlung in das Färbungsbad bis zur Oberfläche des Kunststoffteils, auf das die partielle Einfärbung aufgebracht werden soll. Es wurde mit dem Laserstrahl bestrahlt.

**Tabelle 1: Bedingungen des farbigen Lasergravierens**

| | **Beispiel 1 (V)** | **Beispiel 2** | **Beispiel 3** |
|---|---|---|---|
| Temperatur des Färbungsbad | 40 °C | 40 °C | 40 °C |
| Tauchtiefe | 1 mm | 1 mm | 1 mm |
| Vorschubgeschwindigkeit | 100 mm/s | 100 mm/s | 100 mm/s |

| | | | |
|---|---|---|---|
| (V): Vergleichsbeispiel | | | |

### Beispiel 1 - Vergleich:

Eine Kunststofffolie Makrofol^{™} ID 4-4 opak weiß, aus Polycarbonat, mit einer Dicke von 200 µm der Firma Covestro Deutschland AG wurde wie vorstehend unter II. beschrieben eingefärbt.

Nach Entnahme der Kunststoffteils aus dem Färbungsbad war auf der Folie eine blaue Einfärbung im Verlauf-Weg des Lasers entstanden. Die Bereiche der Folie, die nicht mit dem Laser bestrahlt wurden, wurden nicht Wesentlich eingefärbt.

### Beispiel 2 - erfindungsgemäß:

Ein Kunststofffolien-Verbund aus zwei unterschiedlichen Polycarbonatfolien (Folie (a-1) und Folie (a-2) wurde wie vorstehend unter II. beschrieben eingefärbt.

Folie (a-1): Makrofol^{™} ID4-4 opak weiß, aus Polycarbonat in einer Dicke von 300 µm der Firma Covestro Deutschland AG.

Herstellung der Folie (a-2): Transparente Polycarbonatfolie in einer Dicke von 100 µm.

### Master-Batch: Compoundierung eines hoch konzentrierten IR-Masterbatches

Die Herstellung des Masterbatches für die Herstellung der Folie (a-2) erfolgte mit einem herkömmlichen Zweischnecken-Compoundierextruder (ZSK 32) bei für Polycarbonat üblichen Verarbeitungstemperaturen von 250 bis 330°C.

Es wurde ein Master-Batch mit folgender Zusammensetzung compoundiert und anschließend granuliert:
- 4,69 Gew.-% Polycarbonat Makrolon^{™} 3108 der Firma Covestro Deutschland AG
- 0,75 Gew.-% YMDS 874 IR-Absorber der Fa. Sumitomo
- 4,5 Gew.-% Makrolon^{™} 3108-Pulver der Firma Covestro Deutschland AG
- 0,006 Gew.-% (60 ppm) Flammruß 101 (Ruß der Firma Evonik-Degussa GmbH) mit
- einem mittleren Teilchengröße von 95 nm

### Herstellung der Extrusionsfolie (a-2)

Die verwendete Anlage zur Herstellung der extrudierten Folie umfasst:
- einen Extruder zur Extrusion der Schicht enthaltend wenigstens ein Polycarbonat mit einer Schnecke von 60 mm Durchmesser (D) und einer Länge von 33 D. Die Schnecke weist eine Entgasungszone auf;
- eine Schmelzepumpe;
- einem Umlenkkopf;
- eine Breitschlitzdüse mit 450 mm Breite;
- einen Dreiwalzen-Glättkalander mit horizontaler Walzenanordnung, wobei die dritte Walze um +/- 45° gegenüber der Horizontalen schwenkbar ist;
- eine Rollenbahn;
- Dickenmessung
- eine Einrichtung zum beidseitigen Aufbringen von Schutzfolie;
- einer Abzugseinrichtung;
- eine Aufwickelstation.

Das Granulat des Master-Batchs wurde aus dem Trockner in den Fülltrichter des Extruders gefördert. Im Plastifiziersystem Zylinder/Schnecke des Extruders erfolgte das Aufschmelzen und Fördern des Materials. Von der Breitschlitz-Düse gelangte die Schmelze auf den Glättkalander. Auf dem Glättkalander (bestehend aus drei Walzen) erfolgte die endgültige Formgebung und Abkühlung der Folie. Zur Prägung der Oberflächen wurden eine strukturierte Stahl-Walze (6-er Seite) und eine strukturierte Silikon-Gummi-Walze (2-er Seite) eingesetzt. Die für die Strukturierung der Folienoberfläche verwendete Gummi-Walze ist in US-4 368 240 der Fa. Nauta Roll Corporation offenbart. Anschließend wurde die Folie durch einen Abzug transportiert und danach erfolgte die Aufwicklung der Folie.

### Lamination der Folien (a-1) und (a-2)

Die Lamination erfolgte auf einer Laminierpresse der Firma Bürckle, Modell 50/100. Die Folien (a-1) und (a-2) wurden mit folgenden Einstellungen der Presse laminiert:
Heizzone: Temperatur 190°C, Dauer 8 Minuten, Druck 60 N/cm²
Kühlzone: Temperatur 38°C, Dauer 10 Minuten, Druck 100 N/cm²
Nach Entnahme des Kunststofffolien-Verbunds aus dem Färbungsbad war auf der Folie eine intensive blaue Einfärbung im Verlauf- Weg des Lasers entstanden. Die Bereiche der Folie, die nicht mit dem Laser bestrahlt wurden, wurden nicht Wesentlich eingefärbt.

### Beispiel 3 -erfindungsgemäß:

Beim zu färbenden Kunststoffteil handelt es sich um ein mehrschichtiges dreidimensional geformtes Kunststoffteil, welches durch Film-Insert-Moulding (FIM)-Technologie hergestellt wurde. Der Folienverbund aus Beispiel 2 wurde mittels Hochdruckverformung in einer dreidimensionalen Form verformt. Die Verformung erfolgte auf einer HPF-Verformungsanlage der Firma Niebling. Der dreidimensional verformte Folienverbund wurde in einer Kunstsoff-Spritzgussform platziert und mit Bayblend^{™} T65 der Firma Covestro Deutschland AG auf der weißen Seite des Folienverbunds hinterspritzt.

Der so hergestellte Formkörper wurde wie unter II beschrieben eingefärbt.

Nach Entnahme der Kunststoffteils aus dem Färbungsbad war auf dem hinterspritzten Kunststoffteil eine intensive blaue Einfärbung im Verlauf-Weg des Lasers entstanden. Die Bereiche des Kunststoffteils, die nicht mit dem Laser bestrahlt wurden, wurden nicht Wesentlich eingefärbt.

Die Färbung im Verlauf-Weg des Lasers der erfindungsgemäßen Beispiele 2 und 3 war intensiver im Vergleich zu Beispiel 1, in dem kein IR-Absorber in der Folie enthalten war.

## Patentansprüche

1. Verfahren zum partiellen Einfärben, von Kunststoffteilen, enthaltend die Schritte
i) Eintauchen eines Kunststoffteils in ein Färbungsbad,
ii) gegebenenfalls Erwärmen des Färbungsbads,
iii) Bestrahlung des Kunststoffteils aus i) und ggfs. ii) mit fokussierter nicht-ionisierender elektromagnetischer Strahlung,
wobei die partielle Einfärbung im Wesentlichen nur an den in Schritt iii) bestrahlten Stellen erfolgt; wobei der Wellenlängenbereich der fokussierten nicht-ionisierenden elektromagnetischen Strahlung so gewählt wird, dass das Färbungsbad eine Lichtdurchlässigkeit von ≥ 10 % bis ≤ 99%, bevorzugt von ≥ 30 % bis ≤ 95 %, besonders bevorzugt ≥ 40 % bis ≤ 93% bestimmt nach ISO 13468-2 aufweist;
wobei das Kunststoffteil wenigstens ein Additiv umfasst, welches im Wellenlängenbereich der eingesetzten fokussierten nicht-ionisierenden elektromagnetischen Strahlung ein Absorptionsmaximum aufweist, oder wobei das Kunststoffteil mit wenigstens einem Additiv in Form eines Beschichtungsmittels beschichtet ist, welches im Wellenlängenbereich der eingesetzten fokussierten nicht-ionisierenden elektromagnetischen Strahlung ein Absorptionsmaximum aufweist.

2. Verfahren gemäß Anspruch 1, wobei das Kunststoffteil einen thermoplastischen Kunststoff, vorzugsweise einen thermoplastischen Kunststoff ausgewählt aus Polymerisaten von ethylenisch ungesättigten Monomeren und/oder Polykondensaten von bifunktionellen reaktiven Verbindungen und/oder Polyadditionaprodukten von bifunktionellen reaktiven Verbindungen, enthält.

3. Verfahren gemäß Anspruch 1 oder 2, wobei Schritt iii) mittels Laserstrahlung einer Wellenlänge im Bereich von ≥ 0,70 µm bis ≤ 1000 µm, vorzugsweise im Bereich von ≥ 1,0 µm bis ≤ 50 µm, besonders bevorzugt im Bereich von ≥ 1,0 µm bis ≤ 2,5 µm erfolgt.

4. Verfahren gemäß Anspruch 1 bis 3 , wobei das Additiv mindestens einen oder mehrere organische und/oder anorganische IR-Absorber umfasst.

5. Verfahren gemäß Anspruch 1 bis 4, wobei das Additiv mindestens einen oder mehrere anorganische IR-Absorber aus der Gruppe der Boride und/oder Wolframate, sowie deren Mischungen, vorzugsweise mindestens oder mehrere einen IR-Absorber aus der Gruppe der Wolframate, umfasst.

6. Verfahren gemäß Anspruch 1 bis 5, wobei das Färbungsbad mindestens ein Farbmittel, vorzugsweise mindestens einen Farbstoff, oder Mischungen aus diesen umfasst.

7. Verfahren gemäß Anspruch 1 bis 6, wobei das Färbungsbad mindestens einen Farbstoff der Gruppe Solvent Dyes und/oder Dispers Dyes gemäß Klassifizierung des Colour Index oder Mischungen aus diesen Farbstoffen umfasst.

8. Verfahren gemäß Anspruch 1 bis 7, wobei die Tauchtiefe des Kunststoffteils in Schritt i) ≤ 120 mm, vorzugsweise 0,01 bis 100 mm, besonders bevorzugt 0,1 bis 20 mm beträgt, die Tauchtiefe der Eindringtiefe der eingesetzten Strahlung in das Färbungsbad bis zur Oberfläche des Kunststoffteils, auf das die partielle Einfärbung aufgebracht werden soll, entspricht.

9. Verfahren gemäß Anspruch 1 bis 8, wobei das Färbungsbad umfasst:
a) Lösungsmittel und/oder Dispergiermittel, vorzugsweise Wasser und/oder organisches Lösungsmittel,
b) mindestens ein Farbmittel, vorzugsweise mindestens einen Farbstoff, besonders bevorzugt mindestens einen Farbstoff der Solvent Dyes und/oder Dispers Dyes gemäß Klassifizierung des Colour Index oder einer Mischung aus den genannten.

10. Verfahren gemäß Anspruch 1 bis 9, wobei vor oder nach den Schritten i) bis iii) mit fokussierter nicht-ionisierender elektromagnetischer Strahlung wie in Schritt iii) in Abwesenheit des Färbungsbades bestrahlt wird.

11. Verfahren gemäß Anspruch 1 bis 10, wobei das Kunststoffteil einen Schichtaufbau enthält, wobei dieser Schichtaufbau, wenigstens eine Schicht eines thermoplastischen Kunststoffs ("Schicht a)") umfasst, wobei diese wenigstens eine Schicht a) wenigstens eine äußere Schicht des Schichtaufbaus bildet und wenigstens ein Additiv umfasst, welches im Wellenlängenbereich der eingesetzten fokussierten nicht-ionisierenden elektromagnetischen Strahlung ein Absorptionsmaximum aufweist oder wobei dieser Schichtaufbau, wenigstens eine Schicht eines thermoplastischen Kunststoffs ("Schicht a')") umfasst, wobei diese wenigstens eine Schicht a') wenigstens eine äußere Schicht des Schichtaufbaus bildet und diese äußere Schicht a') mit wenigstens einem Additiv in Form eines Beschichtungsmittels beschichtet ist, welches im Wellenlängenbereich der eingesetzten fokussierten nicht-ionisierenden elektromagnetischen Strahlung ein Absorptionsmaximum aufweist.

12. Verfahren gemäß Anspruch 1 bis 11, wobei das Kunststoffteil einen Schichtaufbau enthält, wobei dieser Schichtaufbau, wenigstens eine Schicht eines thermoplastischen Kunststoffs ("Schicht a)") umfasst, wobei diese wenigstens eine Schicht a) wenigstens eine äußere Schicht des Schichtaufbaus bildet und wenigstens ein Additiv umfasst, welches im Wellenlängenbereich der eingesetzten fokussierten nicht-ionisierenden elektromagnetischen Strahlung ein Absorptionsmaximum aufweist, und wenigstens eine weitere Schicht eines thermoplastischen Kunststoffs ("Schicht b)") umfasst.

13. Verfahren gemäß Anspruch 11 oder 12, wobei wenigstens eine Schicht a) oder Schicht a') und/oder Schicht b) zusätzlich wenigstens ein Schwarzpigment, besonders bevorzugt Ruß, enthält.

14. Verfahren gemäß Anspruch 12, wobei die Schicht b) zusätzlich wenigstens ein Schwarzpigment, besonders bevorzugt Ruß enthält.

## Claims

1. Process for partial coloring of plastic parts containing the steps of
i) immersing a plastic part in a coloring bath,
ii) optionally heating the coloring bath,
iii) irradiating the plastic part from i) and optionally ii) with focused nonionizing electromagnetic radiation,
wherein the partial coloring is effected substantially only at the sites irradiated in step iii);
wherein the wavelength range of the focused nonionizing electromagnetic radiation is chosen such that the coloring bath has a light permeability of ≥ 10% to ≤ 99%, preferably of ≥ 30% to ≤ 95%, particularly preferably ≥ 40% to ≤ 93%, determined according to ISO 13468-2;
wherein the plastic part comprises at least one additive which has an absorption maximum in the wavelength range of the employed focused nonionizing electromagnetic radiation or wherein the plastic part is coated with at least one additive in the form of a coating composition which has an absorption maximum in the wavelength range of the employed focused nonionizing electromagnetic radiation.

2. Process according to Claim 1, wherein the plastic part contains a thermoplastic plastic, preferably a thermoplastic plastic selected from polymers of ethylenically unsaturated monomers and/or polycondensates of bifunctional reactive compounds and/or polyaddition products of bifunctional reactive compounds.

3. Process according to Claim 1 or 2, wherein step iii) is carried out using laser radiation having a wavelength in the range from ≥ 0.70 µm to ≤ 1000 µm, preferably in the range from ≥ 1.0 µm to ≤ 50 µm, particularly preferably in the range from ≥ 1.0 µm to ≤ 2.5 µm.

4. Process according to Claims 1 to 3, wherein the additive comprises at least one or more organic and/or inorganic IR absorbers.

5. Process according to Claims 1 to 4, wherein the additive comprises at least one or more inorganic IR absorbers from the group of borides and/or tungstates and mixtures thereof, preferably at least one or more IR absorbers from the group of tungstates.

6. Process according to Claims 1 to 5, wherein the coloring bath comprises at least one colorant, preferably at least one dye or mixtures thereof.

7. Process according to Claims 1 to 6, wherein the coloring bath comprises at least one dye from the group of solvent dyes and/or disperse dyes according to the Colour Index classification or mixtures of these dyes.

8. Process according to Claims 1 to 7, wherein the immersion depth of the plastic part in step i) is ≤ 120 mm, preferably 0.01 to 100 mm, particularly preferably 0.1 to 20 mm, where the immersion depth corresponds to the penetration depth of the employed radiation into the coloring bath up to the surface of the plastic part onto which the partial coloring is to be applied.

9. Process according to Claims 1 to 8, wherein the coloring bath comprises:
a) solvent and/or dispersant, preferably water and/or organic solvent,
b) at least one colorant, preferably at least one dye, particularly preferably at least one dye from the solvent dyes and/or disperse dyes according to the Colour Index classification or a mixture of these dyes.

10. Process according to Claims 1 to 9, wherein steps i) to iii) are preceded or followed by an irradiation with focused nonionizing electromagnetic radiation as in step iii) in the absence of the coloring bath.

11. Process according to Claims 1 to 10, wherein the plastic part has a layer construction, wherein this layer construction comprises at least one layer of a thermoplastic plastic ("layer a)"), wherein this at least one layer a) forms at least one outer layer of the layer construction and comprises at least one additive which has an absorption maximum in the wavelength range of the employed focused nonionizing electromagnetic radiation or wherein this layer construction comprises at least one layer of a thermoplastic plastic ("layer a')"), wherein this at least one layer a') forms at least one outer layer of the layer construction and this outer layer a') is coated with at least one additive in the form of a coating composition which has an absorption maximum in the wavelength range of the employed focused nonionizing electromagnetic radiation.

12. Process according to Claims 1 to 11, wherein the plastic part has a layer construction, wherein this layer construction comprises at least one layer of a thermoplastic plastic ("layer a)"), wherein this at least one layer a) forms at least one outer layer of the layer construction and comprises at least one additive which has an absorption maximum in the wavelength range of the employed focused nonionizing electromagnetic radiation, and comprises at least one further layer of a thermoplastic plastic ("layer b)").

13. Process according to Claim 11 or 12, wherein at least one layer a) or layer a') and/or layer b) additionally contains at least one black pigment, particularly preferably carbon black.

14. Process according to Claim 12, wherein the layer b) additionally contains at least one black pigment, particularly preferably carbon black.

## Revendications

1. Procédé pour la coloration partielle de pièces en matériau synthétique, contenant les étapes
i) immersion d'une pièce en matériau synthétique dans un bain de coloration,
ii) le cas échéant chauffage du bain de coloration,
iii) irradiation de la pièce en matériau synthétique provenant de i) et le cas échéant de ii) par un rayonnement électromagnétique non ionisant focalisé,
la coloration partielle n'ayant lieu essentiellement qu'au niveau des endroits irradiés dans l'étape iii) ; la plage de longueur d'onde du rayonnement électromagnétique non ionisant focalisé étant choisie de manière telle que le bain de coloration présente une transmission de la lumière de ≥ 10% à ≤ 99%, de préférence de ≥ 30% à ≤ 95%, de manière particulièrement préférée de ≥ 40% à ≤ 93%, déterminée selon la norme ISO 13468-2 ;
la pièce en matériau synthétique comprenant au moins un additif qui présente un maximum d'absorption dans la plage de longueur d'onde du rayonnement électromagnétique non ionisant focalisé utilisé ou la pièce en matériau synthétique étant revêtue par au moins un additif sous forme d'un matériau de revêtement qui présente un maximum d'absorption dans la plage de longueur d'onde du rayonnement électromagnétique non ionisant focalisé utilisé.

2. Procédé selon la revendication 1, la pièce en matériau synthétique contenant un matériau synthétique thermoplastique, de préférence un matériau synthétique thermoplastique choisi parmi les polymères de monomères éthyléniquement insaturés et/ou les produits de polycondensation de composés réactifs bifonctionnels et/ou les produits de polyaddition de composés réactifs bifonctionnels.

3. Procédé selon la revendication 1 ou 2, l'étape iii) ayant lieu au moyen d'un rayonnement laser d'une longueur d'onde dans la plage de ≥ 0,70 µm à ≤ 1000 µm, de préférence dans la plage de ≥ 1,0 µm à ≤ 50 µm, de manière particulièrement préférée dans la plage de ≥ 1,0 µm à ≤ 2,5 µm.

4. Procédé selon la revendication 1 à 3, l'additif comprenant au moins un ou plusieurs absorbants organiques et/ou inorganiques des IR.

5. Procédé selon la revendication 1 à 4, l'additif comprenant au moins un ou plusieurs absorbants inorganiques des IR du groupe des borures et/ou des tungsténates, ainsi que leurs mélanges, de préférence au moins un ou plusieurs absorbants des IR du groupe des tungsténates.

6. Procédé selon la revendication 1 à 5, le bain de coloration comprenant au moins une matière colorante, de préférence au moins un colorant, ou des mélanges correspondants.

7. Procédé selon la revendication 1 à 6, le bain de coloration comprenant au moins un colorant du groupe des Solvent Dyes et/ou des Dispers Dyes selon la classification du Colour Index ou des mélanges de ces colorants.

8. Procédé selon la revendication 1 à 7, la profondeur d'immersion de la pièce en matériau synthétique dans l'étape i) étant ≤ 120 mm, de préférence de 0,01 à 100 mm, de manière particulièrement préférée de 0,1 à 20 mm, la profondeur d'immersion correspondant à la profondeur de pénétration du rayonnement utilisé dans le bain de coloration jusqu'à la surface de la pièce en matériau synthétique sur laquelle la coloration partielle doit être appliquée.

9. Procédé selon la revendication 1 à 8, le bain de coloration comprenant :
a) des solvants et/ou des dispersants, de préférence de l'eau et/ou un solvant organique,
b) au moins une matière colorante, de préférence au moins un colorant, de manière particulièrement préférée au moins un colorant parmi les Solvent Dyes et/ou les Dispers Dyes selon la classification du Colour Index ou un mélange des matières colorantes mentionnées.

10. Procédé selon la revendication 1 à 9, une irradiation en l'absence du bain de coloration ayant lieu avant ou après les étapes i) à iii) par le rayonnement électromagnétique non ionisant focalisé comme dans l'étape iii).

11. Procédé selon la revendication 1 à 10, la pièce en matériau synthétique contenant une structure stratifiée, cette structure stratifiée comprenant au moins une couche d'un matériau synthétique thermoplastique ("couche a)"), cette au moins une couche a) formant au moins une couche externe de la structure stratifiée, et au moins un additif qui présente un maximum d'absorption dans la plage de longueur d'onde du rayonnement électromagnétique non ionisant focalisé utilisé ou cette structure stratifiée comprenant au moins une couche d'un matériau synthétique thermoplastique ("couche a')"), cette au moins une couche a') formant au moins une couche externe de la structure stratifiée et cette couche externe a') étant revêtue par au moins un additif sous forme d'un agent de revêtement qui présente un maximum d'absorption dans la plage de longueur d'onde du rayonnement électromagnétique non ionisant focalisé utilisé.

12. Procédé selon la revendication 1 à 11, la pièce en matériau synthétique contenant une structure stratifiée, cette structure stratifiée comprenant au moins une couche d'un matériau synthétique thermoplastique ("couche a)"), cette au moins une couche a) formant au moins une couche externe de la structure stratifiée, et au moins un additif qui présente un maximum d'absorption dans la plage de longueur d'onde du rayonnement électromagnétique non ionisant focalisé utilisé et au moins une autre couche d'un matériau synthétique thermoplastique ("couche b)").

13. Procédé selon la revendication 11 ou 12, au moins une couche a) ou couche a') et/ou couche b) contenant en outre au moins un pigment noir, de manière particulièrement préférée de la suie.

14. Procédé selon la revendication 12, la couche b) contenant en outre au moins un pigment noir, de manière particulièrement préférée de la suie.
